# EUROPÄISCHE PATENTANMELDUNG

(11) **EP 1 844 968 A1**
(43) Veröffentlichungstag der Anmeldung: **17.10.2007**
(21) Anmeldenummer: 07005403.6
(22) Anmeldetag: 15.03.2007
(51) Int. Cl.: B60J 7/06

(54) **Längsholm und Querspriegel für einen Nutzfahrzeug-bzw. Anhängeraufbau und Schiebeverdeck mit einem derartigen Längsholm bzw. Querspiegel**

(30) Priorität: 13.04.2006 DE 20606052 U
(71) Anmelder: Lange, Hans Juergen, 21107 Hamburg (DE); Kaiser, Ria, Dipl.-Ing., 21107 Hamburg (DE); Kögel Fahrzeugwerke GmbH, 89349 Burtenbach (DE)
(72) Erfinder: Lange, Hans Jürgen, 21107 Hamburg (DE); Kaiser, Ria, Dipl.-Ing., 21107 Hamburg (DE)
(74) Vertreter: Grünecker, Kinkeldey, Stockmair & Schwanhäusser Anwaltssozietät

(57) **Zusammenfassung**

Durch die Erfindung soll ein Längsholm (10) für einen Nutzfahrzeug- bzw. Anhängeraufbau mit wenigstens einer Führungsschiene (11) zur längsverschieblichen Lagerung von Querspriegeln (12) mit einfachen Mitteln eine Vergrößerung der lichten Höhe eines Laderaumes erlauben und für ein Schiebeverdeck genutzt werden können. Diese Aufgabe wird dadurch gelöst, dass der Längsholm (10) einen Verbundwerkstoff, insbesondere einen Kohlenstoff-Faser-Verbundwerkstoff (CFK) aufweist.

## Beschreibung

Die Erfindung betrifft einen Längsholm sowie einen Querspriegel jeweils für einen Nutzfahrzeug- bzw. Anhängeraufbau sowie ein Schiebeverdeck mit einem derartigen Längsholm bzw. Querspriegel.

Ein gattungsgemäßer Längsholm bzw. Querspriegel sowie ein gattungsgemäßes Schiebeverdeck jeweils mit den Merkmalen des Oberbegriffs des Anspruchs 1, des Anspruchs 7 sowie des Anspruchs 17 sind beispielsweise aus der EP 1 174 297 A1 bekannt, die auf die Anmelderin zurückgeht.

Schiebeverdecke werden bei Nutzfahrzeugen oder Nutzfahrzeuganhängern eingesetzt, um ein Beladen von oben zu ermöglichen. Dazu umfassen herkömmliche Schiebeverdecke zwei voneinander beabstandete und parallel angeordnete Längsholme, die die Dachaußenkanten bilden. Quer zu den Längsholmen sind mehrere, in Holmlängsrichtung, also in Längsrichtung des Fahrzeuges verschieblich gelagerte Querspriegel angeordnet, auf denen eine Plane aufliegt. Zum Öffnen des Laderaumes werden die Spriegel zu einem Fahrzeugende hin verschoben, wobei die Plane mitgenommen und gefaltet wird.

Zur Lagerung der Querspriegel an den Längsholmen sind unterschiedliche Systeme bekannt.

Beispielsweise sind die Querspriegel bei dem Planenaufbau gemäß DE 198 39 775 A1 durch innenseitig montierte Rollwagen am Längsholm verschieblich geführt. Dabei weist jeder Rollwagen zwei unter einem Winkel von 90° angestellte Rollen auf, die in entsprechend angeordneten Laufbahnen der Führungsschiene gelagert sind. Dadurch ist eine Kraftübertragung sowohl in vertikaler als auch in horizontaler Richtung möglich, so dass der jeweilige Querspriegel sowohl seitlich als auch in Höhenrichtung geführt ist. Die für die Höhenführung erforderliche Rolle ist dabei auf der Innenseite des Längsholmes, d.h. auf der dem Laderaum zugewandten Seite des Holmes angeordnet. Daher weist der Rollwagen im Bereich der Innenkante des Längsholms eine relativ hohe Bauhöhe auf, wodurch die lichte Höhe, d.h. der nach oben nutzbare Laderaum eingeschränkt wird.

Überdies sind in den Längsholmen zwei weitere Führungsschienen für die Rollwagen der Rungen bzw. die Rollwagen der Seitenwände integriert. Diese weiteren Führungsschienen sind aus Gründen der Stabilität des Längsholmes horizontal nebeneinander angeordnet, so dass der Längsholm vergleichsweise weit in den Laderaum hineinreicht. Dadurch geht weiterer Nutzraum verloren.

Aus der DE 44 21 280 A1 ist ein ähnliches System zur Lagerung von Querspriegeln bekannt, das sich von dem Aufbau gemäß DE 198 39 775 A1 dadurch unterscheidet, dass der Rollwagen drei Rollen aufweist, wobei die beiden für die Höhenführung erforderlichen Rollen in Gegenüberstellung an den Holmlängsseiten angeordnet sind. Auch bei dieser Spriegellagerung kommt es zu den vorstehend beschriebenen Nachteilen im Hinblick auf die Ausnutzung des Laderaums.

Demgegenüber bietet das gattungsgemäße Schiebeverdeck gemäß EP 1 174 297 A1 den Vorteil, dass der Rollwagen zur Lagerung der Querspriegel am Längsholm vergleichsweise niedrig gebaut ist. Dies wird dadurch erreicht, dass die für die Höhenführung erforderliche Rolle nicht mehr an der Längsholminnenseite, sondern an der Außenseite angeordnet ist. Das bedeutet, dass der Rollwagen im Bereich der Innenseite des Längsholmes niedrig ausgeführt sein kann, so dass die lichte Höhe des Laderaums vergrößert wird. Allerdings erfordert die schlanke Ausführung des Längsholmes einen Versteifungsschenkel, der sich, ausgehend vom vertikalen Hauptschenkel, in dem die verschiedenen Rollwagen geführt sind, nach innen, d.h. in den Laderaum hinein erstreckt.

Zwar ist aus der DE 30 14 385 A1 ein Längsholm für ein Schiebeverdeck bekannt, der relativ schmal ist. Allerdings sind bei diesem aus einem Vierkantprofil und einem T-Profil aufgebauten Längsholm keine Maßnahmen vorgesehen, um eine ausreichende Torsions- bzw. Biegesteifigkeit des Längsholmes zu gewährleisten.

Dasselbe gilt für die Spriegellagerung gemäß DE 198 55 653 A1, die einen Längsholm ohne Querversteifung aufweist.

Alternativ zu den vorstehend beschriebenen Spriegellagerungen mittels Rollwagen sind auch Gleitlagerungen bekannt.

Beispielsweise ist aus der DE 103 03 094 A1, die ebenfalls auf die Anmelderin zurückgeht, ein Schiebeverdeck bekannt, das einen Längsholm mit zwei senkrecht zueinander angeordneten Führungsnuten aufweist. Anstelle der vorstehend beschriebenen Rollwagen sind die Führungselemente der Querspriegel mit Gleitsteinen ausgerüstet, die in die Führungsnuten eingreifen. Auch hier wird das im Rahmen der EP 1 174 297 A1 beschriebene Konzept verwirklicht, die Höhenführung an die Längsholinaußenseite zu verlegen. Allerdings sind die beiden Führungsschienen für die Rungenrollwägen bzw. Seitenplanenrollwägen aus Gründen der Stabilität horizontal nebeneinander angeordnet, so dass der Längsholm relativ breit ist, wodurch die Nutzung des Laderaums eingeschränkt wird.

Eine andere Möglichkeit der Gleitlagerung ist in der DE 0 168 002 A2 beschrieben, bei der der Längsholm ein Vierkantprofil aufweist, an dessen Unterseite ein Führungsschlitz ausgebildet ist. Das Vierkantprofil des Längsholmes umschließt formschlüssig einen im Querschnitt im Wesentlichen rechteckigen Gleitkörper, wobei der Querspriegel mit dem Gleitkörper im Bereich des Führungsschlitzes verschraubt ist. Bei dieser Ausführung des Längsholmes als Vierkantprofil ist aufgrund der Länge des Längsholmes die Torsions- bzw. Biegefestigkeit problematisch.

Insgesamt stellt sich bei den bekannten Spriegellagerungen das Problem, dass durch die Anbindung des Spriegels an den Rollwagen im Bereich der Innenkante des Längsholmes Laderaum verloren geht. Hinzukommt, dass die lichte Höhe des Laderaumes durch Versteifungsmaßnahmen begrenzt wird, beispielsweise durch den nach innen ragenden Versteifungsschenkel am Längsholm oder durch die Erhöhung der Breite des Längsholmes.

Der Erfindung liegt die Aufgabe zugrunde, einen Längsholm sowie einen Querspriegel anzugeben, die jeweils eine Vergrößerung der lichten Höhe eines Laderaumes mit einfachen Mitteln erlauben. Ferner soll ein Schiebeverdeck mit einem derartigen Längsholm bzw. Querspriegel angegeben werden.

Erfindungsgemäß wird die Aufgabe im Hinblick auf den Längsholm durch den Gegenstand des Anspruches 1, im Hinblick auf den Querspriegel durch den Gegenstand des Anspruches 7 und im Hinblick auf das Schiebeverdeck durch den Gegenstand des Anspruches 17 gelöst.

Der Erfindung liegt der Gedanke zugrunde, einen Längsholm für einen Nutzfahrzeug- bzw. Anhängeraufbau mit wenigstens einer Führungsschiene zur längsverschieblichen Lagerung von Querspriegeln anzugeben, wobei der Längsholm einen Verbundwerkstoff, insbesondere einen Kohlenstoff-Faser-Verbundwerkstoff (CFK) aufweist.

Die Verwendung eines Verbundwerkstoffes zur Herstellung des Längsholmes schafft erfindungsgemäß die Voraussetzung dafür, dass allein durch die Materialeigenschaften ein verbessertes Biege- und Torsionsverhalten des Längsholmes erreicht wird, ohne dass dazu zusätzliche konstruktive Maßnahmen erforderlich sind. Die Biegefestigkeit, insbesondere die Biegewechselfestigkeit von üblicherweise verwendeten Stählen oder auch Aluminium ist begrenzt, so dass im Stand der Technik generell zusätzliche Maßnahmen, wie beispielsweise die Ausbildung von Aussteifungsschenkeln erforderlich sind, um eine ausreichende Biege- bzw. Torsionsfestigkeit zu erreichen. Verbundwerkstoffe bieten hingegen die Möglichkeit, eine vergleichsweise höhere Biegefestigkeit bzw. Torsionsfestigkeit des Längsholmes einzustellen. Dies gilt insbesondere für Kohlenstoff-Faser-Verbundwerkstoffe (CFK), die eine wesentlich höhere Biege- bzw. Torsionsfestigkeit als Stahl aufweisen. Es wird somit erfindungsgemäß die Voraussetzung geschaffen, den Längsholm schlank, d.h. mit einer geringen Quererstreckung auszubilden, ohne dass zusätzliche Versteifungsmittel, insbesondere Aussteifungsschenkel erforderlich sind. Die Verwendung von Verbundwerkstoffen zur Herstellung des Längsholmes, insbesondere von Kohlenstoff-Faser-Verbundwerkstoffen gestattet also eine Verbesserung der Ausnutzung des Laderaumes durch eine Vergrößerung der lichten Höhe, ohne dass dabei die Führungs- bzw. Lagereigenschaften des Längsholmes beeinträchtigt werden.

Im Hinblick auf den Querspriegel liegt der Erfindung der Gedanke zugrunde, die Führungselemente mit jeweils mindestens einer Kralle auszubilden, die eine Hinterschneidung aufweist, wobei die Hinterschneidung so angepasst ist, dass eine Führungsschiene des Längsholmes im montierten Zustand zumindest abschnittsweise formschlüssig hintergriffen wird.

Das bedeutet, dass anstelle der im Stand der Technik bekannten Rollwagen eine Kralle eingesetzt wird, so dass die Krafteinleitung direkt in das Führungselement erfolgt und nicht indirekt über Rollen. Damit wird die Bauhöhe des Führungselementes verringert, da die Lagerung der Rollen entfällt. Dies wiederum führt dazu, dass die lichte Höhe des Laderaumes vergrößert wird, so dass dieser besser ausgenutzt werden kann.

Bei dem erfindungsgemäßen Längsholm und dem erfindungsgemäßen Querspriegel handelt es sich um miteinander in Beziehung stehende Bauteile, die im Gebrauch zum Öffnen bzw. Schließen des Schiebeverdeckes zusammenwirken und auch zusammen im Rahmen des Planenaufbaus verkauft werden. Das erfindungsgemäße Schiebeverdeck kombiniert die mit dem Längsholm und dem Querspriegel erzielbaren Vorteile derart, dass insgesamt eine signifikante Verbesserung der Ausnutzung des Laderaumes sowohl durch eine schmale Ausbildung des Längsholmes als auch durch eine kompakte Bauweise der Führungselemente des Querspriegels erreicht wird.

Verbesserte Ausführungsformen und konstruktive Details der Erfindung sind in den Unteransprüchen angegeben.

Vorzugsweise ist der Längsholm einschenklig ausgebildet. Auf diese Weise wird ein besonders schmaler bzw. schlanker Längsholm ausgebildet, der aufgrund der erfindungsgemäßen Verwendung von Verbundwerkstoff, insbesondere eines Kohlenstoff-Faser-Verbundwerkstoffes eine ausreichende Steifigkeit aufweist. Dabei kann der Längsholm weitere Führungsschienen zur längsverschieblichen Lagerung von Rungen und/oder einer Seitenwandung aufweisen, wobei die Führungsschienen vertikal, insbesondere vertikal in einer Ebene angeordnet sind. Die vertikale Anordnung der Führungsschienen bedeutet, dass die Führungsschienen im montierten Zustand im Wesentlichen untereinander angeordnet sind, ohne dass dabei eine der Führungsschienen seitlich übermäßig vorsteht, so dass eine besonders geringe Baubreite des Längsholms erreicht wird.

Ferner kann ein Außenprofil der Führungsschiene für die Querspriegel gekrümmt, insbesondere konvex gekrümmt ausgebildet sein. Die gekrümmte Ausführung eines Außenprofils eignet sich besonders gut für die formschlüssige Verbindung mit dem Führungselement des Querspriegels. Dabei kann die Führungsschiene für die Querspriegel einen im Wesentlichen stab- oder rohrförmigen Querschnitt aufweisen. Ein derartiges Schienenprofil ist besonders einfach herzustellen.

Bei einer weiteren bevorzugten Ausführungsform ist vorgesehen, dass Bohrungen auf dem Umfang der Führungsschiene für die Querspriegel angeordnet sind, wobei die Bohrungen mit einem in der Führungsschiene in Längsrichtung ausgebildeten Hohlkanal verbunden sind, der an eine Druckluftversorgung anschließbar ist. Die Beaufschlagung der Führungsschiene mit Druckluft führt dazu, dass sich unter der Kralle des Querspriegels ein Luftkissen ausbildet, so dass diese besonders leicht auf der Führungsschiene gleitet.

Im Hinblick auf bevorzugte Ausführungsformen des Querspriegels kann vorgesehen sein, dass ein Innenprofil der Kralle komplementär zu einem Außenprofil der Führungsschiene ausgebildet ist. Dadurch wird eine besonders kompakte Ausführung der Krallen/Führungsschienenanordnung erreicht.

Das Innenprofil der Kralle kann gekrümmt, insbesondere konkav gekrümmt ausgebildet sein. Diese Ausführungsform eignet sich besonders gut zur Kombination mit dem gekrümmten, insbesondere konvex gekrümmten Außenprofil der Führungsschiene.

Dabei kann die Kralle einen im Wesentlichen hohlzylindrischen Querschnitt mit einem zur Aufnahme der Führungsschiene vorgesehenen Längsschlitz aufweisen. Mit diesem einfachen Aufbau der Kralle wird eine sichere Linearführung des Querspriegels auf der Führungsschiene des Längsholms erreicht.

Eine besonders niedrige Bauhöhe des Führungselementes wird dadurch erreicht, dass ein Querholm des Querspriegels tangential an der Kralle gegenüber dem Längsschlitz angreift.

Die Gleiteigenschaften der Kralle können dadurch verbessert werden, dass die Kralle zur Lagerung auf der Führungsschiene einen Gleiteinsatz und/oder eine Teflonbeschichtung und/oder Gleitsteine umfasst. Diese Ausführungsform eignet sich auch gut zur Kombination mit der aerostatischen Lagerung.

Alternativ dazu kann eine leichtgängige Lagerung des Führungselementes dadurch erreicht werden, dass die Kralle zur Lagerung auf der Führungsschiene Wälzelemente aufweist.

Die Kralle kann eine mit einer Druckluftversorgung verbindbare Luftzufuhreinrichtung aufweisen zur Ausbildung eines Luftkissens zwischen der Kralle und dem Längsholm.

Vorzugsweise weist ein Führungselement mehrere, insbesondere zwei fluchtend angeordnete Krallen auf, wodurch die Stabilität der Spriegelführung verbessert wird.

In einer besonders bevorzugten Ausführungsform weist der Querspriegel einen Verbundwerkstoff, insbesondere einen Kohlenstoff-Faser-Verbundwerkstoff (CFK) auf. Die Verwendung eines Verbundwerkstoffes, insbesondere eines Kohlenstoff-Faser-Verbundwerkstoffes (CFK) ermöglicht, aufgrund der hervorragenden Festigkeitseigenschaften eine besonders kompakte Bauweise des Querspriegels, insbesondere eine vergleichsweise niedrige Bauhöhe. Dies trägt dazu bei, dass die lichte Höhe des Laderaumes vergrößert wird.

Bei dem erfindungsgemäßen Schiebeverdeck kann vorzugsweise vorgesehen sein, dass das Schiebeverdeck eine Plane mit Taschen zur Aufnahme der Querspriegel aufweist, wobei die Querspriegel jeweils Bohrungen umfassen, die mit einer Druckluftversorgung verbindbar sind. Diese Ausführungsform hat den Vorteil, dass die Taschen durch die Querspriegel zur Enteisung des Verdecks aufgeblasen werden können, so dass auf dem Verdeck sich befindliche Eis- oder Schneeschichten aufgebrochen werden, die dann leicht entfernt werden können. Der Vorteil bei dieser Ausführungsform besteht darin, dass nur an lokalen Stellen, d.h. im Bereich der Taschen eine Beaufschlagung mit Druckluft erfolgt, so dass das Aufbrechen der Eisschicht mit vergleichsweise geringer Energie durchgeführt wird. Gleichzeitig genügt es, die Eisschicht an mehreren lokalen Stellen aufzubrechen, um eine Ablösung der Eisschicht über die gesamte Verdecklänge zu erreichen.

Bei einer weiteren bevorzugten Ausführungsform ist vorgesehen, dass die Längsholme Mitnehmer für die Querspriegel aufweisen, wobei die Mitnehmer jeweils einen Magnetkern umfassen, der mit einem oder mehreren Querspriegeln zur magnetischen Kraftübertragung zusammenwirkt. Auf diese Weise kann auf die Verwendung von Seilzügen, die mit den Querspriegeln verbunden sind, verzichtet werden. Außerdem ist für die Betätigung des magnetischen Mitnehmers aufgrund der geringen Reibung weniger Kraft erforderlich.

Ferner können Hubbügel zwischen zwei in Holmlängsrichtung nachfolgend angeordneten Querspriegeln vorgesehen sein, die in Laminatbauweise aus einem Verbundwerkstoff, insbesondere aus einem Kohlenstoff-Faser-Verbundwerkstoff hergestellt sind. Derartige Hubbügel zeichnen sich durch eine besonders gute Festigkeit bei gleichzeitig geringem Gewicht aus. Das Gelenk der Hubbügel kann aus einem Kohlenstoff-Faser-Aramid-Band hergestellt sein, das eine ausreichende Flexibilität zur Realisierung des Bügelgelenkes aufweist.

Alle Merkmale des Längsholmes und alle Merkmale des Querspriegels werden sowohl in Alleinstellung als auch im Zusammenhang mit dem Schiebeverdeck offenbart und zwar einzeln (Längsholm oder Querspriegel) als auch zusammen (Längsholm und Querspriegel).

Die Erfindung wird nachfolgend anhand von Ausführungsbeispielen unter Bezug auf die beigefügten schematischen Zeichnungen mit weiteren Einzelheiten erläutert.

In diesen zeigen
- Fig. 1: eine perspektivische Ansicht eines Längsholmes und zweier Querspriegel;
- Fig. 2: die Anordnung gemäß Fig. 1 in Explosivdarstellung;
- Fig. 3: einen Querschnitt durch den Längsholm gemäß Fig. 1;
- Fig. 4: eine perspektivische Ansicht eines Führungselementes des Querspriegels gemäß Fig. 1;
- Fig. 5: eine Seitenansicht des Führungselementes gemäß Fig. 4; und
- Fig. 6: eine perspektivische Ansicht der Hubbügel gemäß Fig. 1.

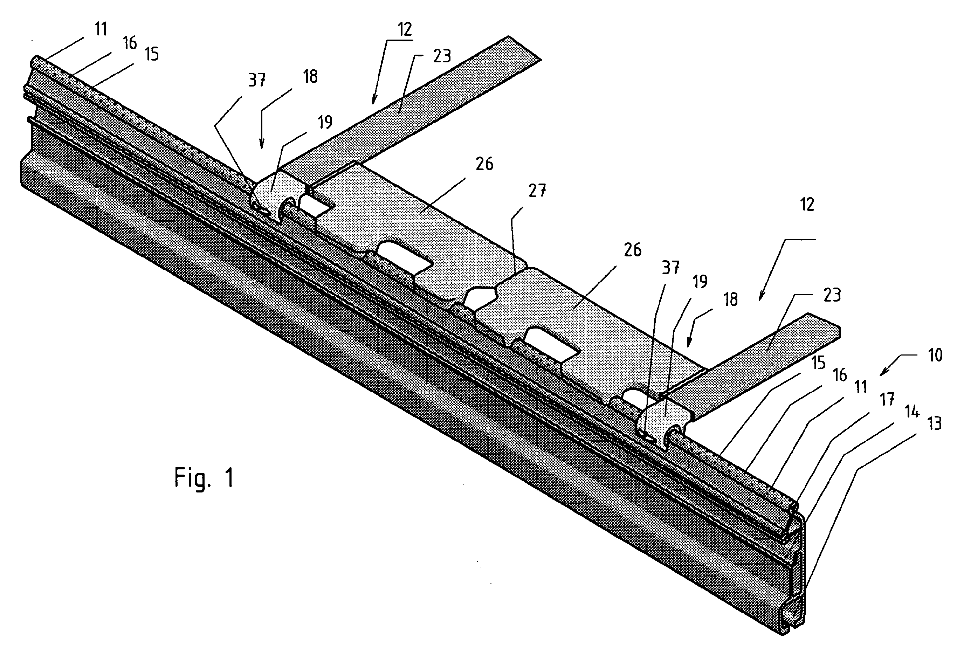

In Fig. 1 ist eine Querspriegel-/Längsholmanordnung dargestellt, die bei Schiebeverdecken für Nutzfahrzeuge bzw. Nutzfahrzeuganhänger zum Einsatz kommt. Die Querspriegel-/Längsholmanordnung ist auch für andere Schiebeverdecke geeignet, bei denen es auf die Öffnung bzw. das Verschließen von Containern oder Behältern zur Beladung bzw. Entladung von oben ankommt.

In der Anordnung gemäß Fig. 1 ist aus Gründen der Übersichtlichkeit nur einer der beiden Längsholme 10 dargestellt, die die Außenkanten eines Schiebeverdecks definieren. Der zweite (nicht dargestellte) Längsholm ist parallel zum Längsholm 10 gemäß Fig. 1 angeordnet und lagert die (nicht dargestellten) Enden der Querspriegel 12, die den in Fig. 1 gezeigten Enden gegenüberliegen.

Der zweite Längsholm einschließlich der Spriegellagerung ist identisch aufgebaut.

Aus Gründen der Übersichtlichkeit ist die Plane, die die Spriegel 12 bzw. den Längsholm 10 überspannt, nicht dargestellt.

Wie in Fig. 1 zu erkennen, weist der Längsholm 10 eine Führungsschiene 11 auf, die zur längsverschieblichen Lagerung der Querspriegel 12 vorgesehen ist. Dazu weisen die Querspriegel 12 jeweils an ihren Enden Führungselemente 18 auf, die mit der jeweils zugehörigen Führungsschiene 11 zur längsverschieblichen Lagerung des Querspriegels 12 in Eingriff sind. Zwischen zwei in Längsrichtung nachfolgenden Querspriegel 12 sind Hubbügel 26 angeordnet, die zum einen als Abstandshalter für die Querspriegel 12 zum anderen zum Falten der Plane dienen, die durch die Querspriegel 12 zum Öffnen des Verdecks verschoben wird. Außerdem liegt die Plane bei geschlossenem Schiebeverdeck auf den Hubbügeln auf.

Die einzelnen Bauteile der Anordnung bzw. des Schiebeverdecks werden nachfolgend im Detail erläutert.

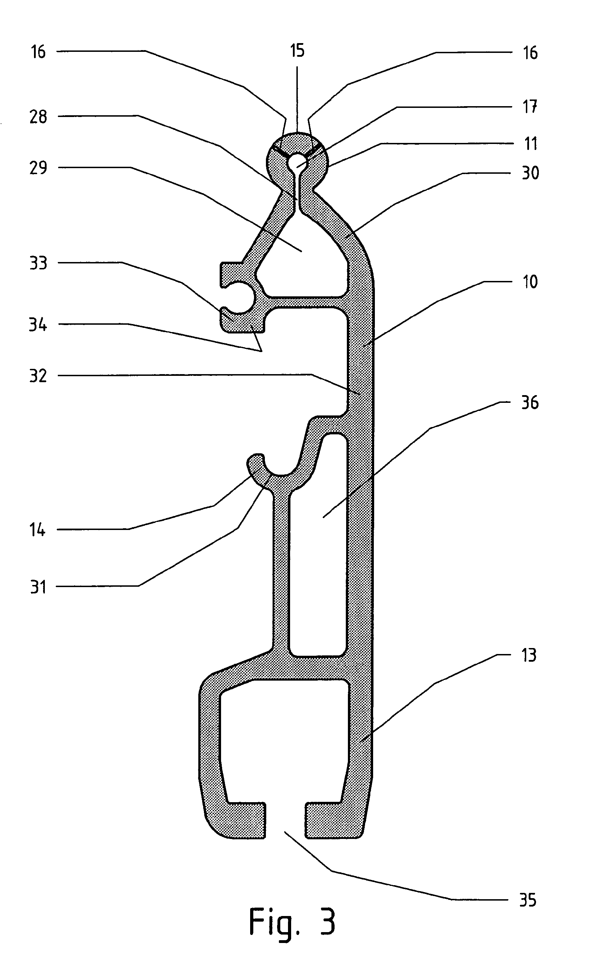

In Fig. 3 ist ein Querschnitt durch den Längsholm 10 gemäß Fig. 1 dargestellt.

Der Längsholm 10 ist aus einem Verbundwerkstoff, insbesondere aus einem Kohlenstoff-Faser-Verbundwerkstoff (CFK) hergestellt. Durch die Verwendung eines Verbundwerkstoffes mit einer Torsions- und Biegefestigkeit, die größer als ist als die Torsions- und Biegefestigkeit der üblicherweise verwendeten Stähle, wird erreicht, dass der Längsholm 10 eine ausreichende Stabilität aufweist, sowohl gegen Durchbiegung als auch gegen Verwindung, ohne dass dafür spezielle konstruktive Maßnahmen erforderlich sind.

Der verwindungs- und biegesteife Längsholm 10 eignet sich besonders gut für den Einsatz in Kombination mit einem Fahrgestell, das ebenfalls aus einem Kunststoff-Faser-Verbundwerkstoff hergestellt ist. Dieses Fahrgestell ist extrem steif, so dass vernachlässigbar geringe Biege- bzw. Torsionskräfte vom Fahrgestell auf den Längsholm 10 übertragen werden.

Der Längsholm 10 ist wie folgt aufgebaut.

In Fig. 3 ist zu erkennen, dass auf der im montierten Zustand oben angeordneten Seite des Längsholmes 10 eine als Toprail dienende Führungsschiene 11 mittig bezogen auf die Quererstreckung des Längsholmes 10 angeordnet ist.

Die Führungsschiene 11 weist eine rohrförmigen Querschnitt auf, wobei andere Querschnittsformen, beispielsweise ein stabförmiger Querschnitt, also ein Vollprofil ebenfalls möglich sind. Im Übrigen kann das Außenprofil 15 der Führungsschiene 11 auch anders geformt sein, beispielsweise nur abschnittsweise gekrümmt, insbesondere konvex gekrümmt.

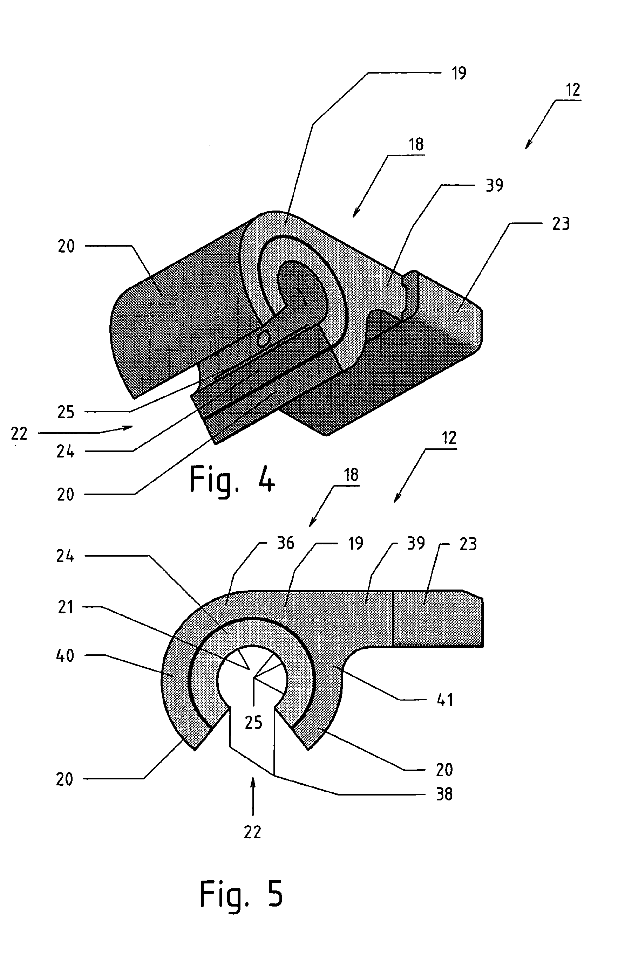

Darüber hinaus ist es auch möglich, die Führungsschiene 11 mit einer konkaven Krümmung auszubilden, insbesondere mit einem Querschnitt, der dem geschlitzten Querschnitt des Führungselementes 18 gemäß Fig. 5 entspricht. Dabei ist der Öffnungsschlitz nach oben ausgerichtet zur Aufnahme eines komplementär ausgebildeten Führungselementes mit einem stabförmigen Querschnitt.

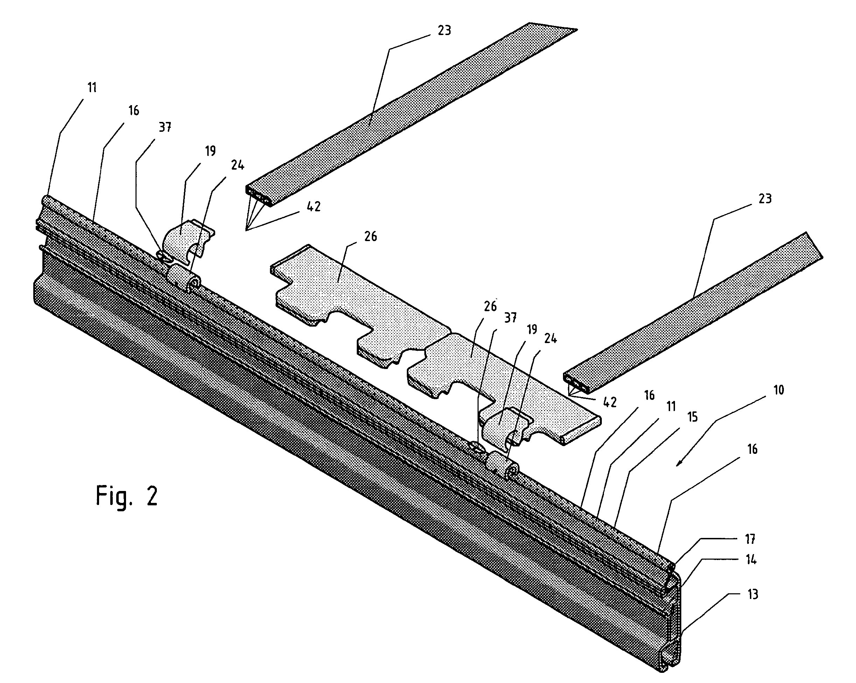

Bei dem in Fig. 3 dargestellten Ausführungsbeispiel sind Bohrungen 16 auf dem Umfang der Führungsschiene 11 angeordnet, die als Düsen fungieren und mit einem in der Führungsschiene 11 in Längsrichtung ausgebildeten ersten Hohlkanal 17 in Verbindung stehen. Der erste Hohlkanal 17 erstreckt sich durch die gesamte rohrförmig ausgebildete Führungsschiene 11 und steht somit mit allen in der Führungsschiene 11 vorgesehenen Bohrungen 16 in Verbindung. Die Verteilung der Bohrungen 16 über die gesamte Länge der Führungsschiene 11 ist besonders gut in Fig. 2 zu erkennen.

Der erste Hohlkanal 17 ist über einen Schlitz 28 mit einem zweiten, größer dimensionierten Hohlkanal 29 verbunden, der sich parallel zum ersten Hohlkanal 17 ebenfalls über die gesamte Länge der Führungsschiene 11 erstreckt. Der zweite Hohlkanal 29 ist an eine, insbesondere in der Stirnwand des Aufbaus angeordnete Druckluftversorgung angeschlossen. Über den Schlitz 28 wird der in der Führungsschiene 11 angeordnete Hohlkanal 17 mit Druckluft versorgt. Die Druckluft tritt durch die Bohrungen 16 nach außen und bildet unter den Führungselementen 18 der Querspriegel 12 ein Luftkissen, auf dem die Querspriegel 12 gleiten. Dazu ist zwischen den Führungselementen 18 und der Führungsschiene 11 ein geringes Spiel eingestellt, um die Ausbildung des Luftkissens zu ermöglichen.

Um zu vermeiden, dass Druckluft auch an den Stellen des Längsholmes 10 austritt, an denen sich beim Zusammenschieben der Plane gerade kein Führungselement 18 befindet, ist ein mit den Querspriegeln, zumindest mit dem Endspriegel mitgeführter Verschluss der Bohrungen 16 im Längsholm 10 vorgesehen. Dieser in den Figuren nicht dargestellte mitwandernde bzw. mitlaufende Verschluss umfasst ein längliches flexibles Dichtelement, dessen Querschnitt dem Querschnitt des oberen Hohlkanales 17 entspricht derart, dass die Bohrungen 16 verschlossen werden, wenn das Dichtelement durch den Hohlkanal 17 geführt wird. Das längliche Dichtelement kann beispielsweise einen Gummischlauch mit einem dem Durchmesser des Hohlkanales 17 im Wesentlichen entsprechenden Außendurchmesser umfassen. Alternativ kann auch ein längliches flexibles Dichtelement aus Vollmaterial verwendet werden, um die Abdichtung der Bohrungen 16 zu erreichen. Das Dichtelement wird mit dem Endspriegel mitgeführt derart, dass die jeweils unter dem Endspriegel angeordneten Bohrungen frei bleiben, so dass ein Luftkissen unter dem Führungselement 18 des Endspriegels sowie unter allen anderen Führungselementen der übrigen Spriegel ausgebildet wird. Der vom Endspriegel bereits überfahrene Abschnitt der Führungsschiene 11 wird durch das nachgeführte flexible Dichtelement sukzessive verschlossen, so dass zumindest in diesem Bereich des Längsholmes 10 keine Druckluft ausströmt.

Die Nachführung des Dichtelementes kann beispielsweise mittels eines Seilzuges erfolgen, der im Inneren des Hohlkanales 17 angeordnet ist. Der nicht im Hohlkanal 17 angeordnete Abschnitt des Dichtelementes kann in dem größer dimensionierten unteren Hohlkanal 29 bevorratet sein und bei Bedarf in den oberen ersten Hohlkanal 17 nachgeführt werden.

Um eine Rückführung des flexiblen Dichtelementes vom ersten Hohlkanal 17 in den unteren zweiten Hohlkanal 29 zu ermöglichen, kann im zweiten Hohlkanal 29 ein weiterer Seilzug vorgesehen sein, der das flexible Dichtelement in den zweiten Hohlkanal 29 bei Bedarf einzieht.

Auf diese Weise können die Bohrungen 16 je nach Bedarf geöffnet bzw. verschlossen werden.

Das Profil des Längsholmes 10 kann in einen oberen, einen mittleren und einen unteren Abschnitt unterteilt werden.

Das Profil des oberen Abschnitts wird durch die mittig angeordnete, hohlzylindrische Führungsschiene 11 sowie die sich zur Führungsschiene 11 hin verjüngende Gehäusewand 30 des zweiten Hohlkanals 29 bestimmt. Die maximale Breite des zweiten Hohlkanals 29 einschließlich der Gehäusewanddicke entspricht im wesentlichen der Gesamtbreite des Längsholms 10.

Im mittleren Abschnitt ist vertikal unterhalb der Führungsschiene 11 für die Querspriegel 12 eine weitere, zweite Führungsschiene 14 vorgesehen, in der im Gebrauch die Rollwagen für die Seitenwand, insbesondere die Seitenplane geführt sind.

Die zweite Führungsschiene 14 weist einen hakenförmigen Abschnitt 31 auf, an den sich nach oben hin ein im Querschnitt rechteckiger Abschnitt 32 anschließt. Die Führungsschiene 14 ist dabei seitlich nach außen, also zu der vom Laderaum abgewandten Seite des Längsholmes 10 hin zur Aufnahme der Rollwagen geöffnet.

Zwischen dem zweiten Hohlkanal 29 und dem rechteckigen Abschnitt 32 der weiteren Führungsschiene 14 ist an der Holmaußenseite eine Aufnahme 33 für eine (nicht dargestellte) Abdeckung bzw. Abdichtung vorgesehen. Eine Unterkante 34 der Aufnahme 33 ragt über die obere horizontale Begrenzung des rechteckigen Abschnittes 32 nach unten vor, so dass eine Führung für die Rollwagen der Seitenplane geschaffen wird.

Der unteren Abschnitt des Längsholmes 10 ist durch eine dritte Führungsschiene 13 gebildet, die einen im Wesentlichen rechteckigen Querschnitt aufweist mit einem Führungsschlitz 37 an der Unterseite der Führungsschiene 13.

Zwischen den beiden Führungsschienen 13, 14 für die Rungen- bzw. Seitenwandlung ist eine Hohlkammer 36 angeordnet, die die beiden Führungsschienen 13, 14 voneinander beabstandet. Die Hohlkammer 36 weist einen im Wesentlichen rechteckigen Querschnitt auf, wobei der in Figur 3 obere Bereich der Hohlkammer 36 durch den hakenförmigen Abschnitt 31 der Führungsschiene 14 für die Seitenwandlung begrenzt wird. Durch die Hohlkammer 36 und die damit erreichte Beabstandung der beiden Führungsschienen 13, 14 wird zum einen die Bauhöhe des Längsholmes 10 vergrößert, wodurch die Biegesteifigkeit verbessert werden. Zum anderen wird durch die Beabstandung eine Kollision der Laufwagen der zweiten Führungsschiene 14 mit dem Gehäuse der dritten Führungsschiene 13 vermieden.

Insgesamt ist der Längsholm 10 einschenklig aufgebaut, wobei die Führungsschienen 11, 13, 14 für die Querspriegel 12, die Rungen und die Seitenwandung im Wesentlichen vertikal untereinander bzw. übereinander angeordnet sind. Dadurch ist es möglich, den Längsholm 10 vergleichsweise schmal auszubilden, wobei auf einen Aussteifungsschenkel aufgrund des Verbundwerkstoffes, aus dem der Längsholm 10 hergestellt ist, verzichtet wird.

Der schmale Aufbau des Längsholms 10 wird dadurch weiter verbessert, dass die Führungsschiene 14 für die Seitenplane seitlich nach außen geöffnet ist, wobei die Führung der Laufwagen durch den hakenförmigen Abschnitt 31 in Verbindung mit der Unterkante 34 der Aufnahme 33 für die Abdichtung erfolgt. Durch die seitliche Öffnung der Führungsschiene 14 für die Seitenplane wird in diesem Bereich auf Gehäuseteile verzichtet, die zu einer Erhöhung der Breite des Längsholms 10 führen würden.

Nachfolgend wird mit Bezug auf die Figuren 4 und 5 eines der beiden Führungselemente 18 jeweils eines Querspriegels 12 erläutert.

Das Führungselement 18 umfasst eine Kralle 19, die eine Hinterschneidung 20 aufweist, wobei die Hinterschneidung 20 angepasst ist, um die Führungsschiene 11 des Längsholms 10 im montierten Zustand zumindest abschnittsweise zu hintergreifen. Die Kralle gemäß der Figur 4, 5 ist also geeignet, die Führungsschiene 11 des Längsholms 10 gemäß Figur 3 aufzunehmen und sowohl vertikale als auch horizontale Kräfte zu übertragen. Dadurch wird sowohl eine Höhen- als auch eine Seitenführung der Querspriegel 12 ermöglicht.

Dabei ist ein Innenprofil 21 der Kralle 19 komplementär zu dem Außenprofil 15 der Führungsschiene 11 des Längsholms 10 ausgebildet. Außerdem ist das Innenprofil 21 der Kralle 19 gekrümmt, insbesondere konkav gekrümmt, wodurch eine Kombination mit der im Querschnitt konvex gekrümmten Führungsschiene 11 ermöglicht wird.

Alternativ kann auch ein Außenprofil der Kralle 19 konkav und ein Innenprofil der Führungsschiene komplementär konvex gekrümmt sein.

Konkret ist die Kralle 19 mit einem im Wesentlichen hohlzylindrischen Querschnitt ausgebildet, der einen zur Aufnahme der Führungsschiene 11 vorgesehenen Längsschlitz 22 aufweist. Die Kralle 19 fungiert also als eine in Längsrichtung geschlitzte Führungshülse. Andere Krallenprofile sind möglich, sofern gewährleistet ist, dass die Kralle 19 die Führungsschiene 11 des Längsholms 10 im montierten Zustand zumindest abschnittsweise formschlüssig hintergreift derart, dass die Übertragung von vertikalen und horizontalen Kräften ermöglicht wird. Im Unterschied zu den im Stand der Technik verwendeten Rollwagen wird bei dem vorliegenden Ausführungsbeispiel die Höhen- und Seitenführung der Querspriegel durch ein einziges Bauelement, nämlich die Kralle 19 erreicht. Im Stand der Technik sind dazu die unterschiedlich ausgerichteten, insbesondere senkrecht zueinander angestellten Rollen der Rollwagen erforderlich.

Zur Lagerung der Kralle 19 auf der Führungsschiene 11 ist ein Gleiteinsatz 24 vorgesehen, der mit einem Grundkörper 36 der Kralle 19 formschlüssig verbunden ist, beispielsweise durch Verkleben, Verspreizen oder durch ein Sicherungselement 37, das den Grundkörper 36 mit den Gleiteinsatz 24 verbindet. Das Sicherungselement 37 ist in den Figuren 1 und 2 dargestellt und dient gleichzeitig als Aufnahmebefestigung für die Plane, die mit dem Sicherungselement 37 beispielsweise durch einen Klippverschluss verbunden wird.

Der Gleiteinsatz 24 ist als geschlitzte Hülse ausgebildet, wobei der Gleiteinsatz 24 mit dem Grundkörper 36 im montierten Zustand so ausgerichtet ist, dass die beiden im Gleiteinsatz 24 und Grundkörper 36 ausgebildeten Schlitze den Längsschlitz 22 der Kralle 19 bilden, über den die Führungsschiene 11 in der Kralle 19 aufgenommen wird.

Auf der Innenseite des Gleiteinsatzes 24 sind Gleitsteine 25 angeordnet, insbesondere sechs Gleitsteine 25 durch die die Reibung mit der Führungsschiene 11 verringert wird. Alternativ oder zusätzlich kann auf der Innenseite des Gleiteinsatzes 24 eine Teflonbeschichtung oder eine andere Art der Dauerschmierung vorgesehen sein.

Der Gleiteinsatz 24 mit den Gleitsteinen 25 wird mit der Druckluftlagerung der Querspriegel kombiniert, wie in den Figuren 1 und 2 dargestellt. Dabei sind das Innenprofil 21 der Kralle 19 und das Außenprofil 15 der Führungsschiene 11 so ausgebildet, dass zwischen den beiden Bauteilen ein geringes Spiel eingestellt wird. Durch die Beaufschlagung des Längsholms 10 mit Druckluft tritt diese durch die Bohrungen 16 entlang der Führungsschiene 11 aus, wodurch ein Luftkissen zwischen der Kralle 19 und der Führungsschiene 11 gebildet wird. Dieses Luftkissen hebt die Kralle 19 von der Führungsschiene 11 zumindest bereichsweise ab, so dass die Reibung weiter gesenkt wird. Die Lagerung der Kralle 19 auf der Führungsschiene 11 wird durch die Hinterschneidung 20 sichergestellt, die den hohlzylindrischen Querschnitt der Führungsschiene 11 im Bereich der Kanten 28 des Längsschlitzes 22 der Kralle 19 auch bei der Beaufschlagung mit Druckluft formschlüssig hintergreift.

Alternativ oder zusätzlich zur Druckluftversorgung über die Führungsschiene 15 des Längsholmes 10 kann die Druckluft auch über die Krallen 19 eingeleitet werden. Dazu können auf der Kralleninnenseite Düsenbohrungen über den Umfang verteilt angeordnet sein, die den Gleiteinsatz durchgreifen und in das Kralleninnere münden. Die Düsenbohrungen sind über entsprechende Kanäle mit wenigstens einer, insbesondere mit zwei flexiblen Druckluftleitungen verbunden, die sich im geschlossenen Zustand des Daches über die gesamte Länge des Längsholmes 10 erstrecken. An dieser Druckluftleitung sind die einzelnen Krallen 19 der jeweiligen Querspriegel 12 beispielsweise durch ein T-Stück angeschlossen. Die auf beiden Seiten der Querspriegel vorgesehenen Krallen 19 können jeweils durch separate flexible Druckluftleitungen mit Druckluft versorgt werden. Alternativ dazu kann auch vorgesehen sein, dass für die aerostatische Lagerung nur eine zentrale flexible Druckluftleitung vorgesehen ist, wobei die Düsenbohrungen der beiden Krallen 19 jeweils eines Querspriegels 12 untereinander in Verbindung stehen, so dass die Zufuhr mit Druckluft über die zentrale einzige Druckluftleitung beide Krallen 19 erreicht. Die Druckluftverbindung der beiden Krallen 19 kann beispielsweise durch weitere Druckluftschläuche erfolgen, die am jeweiligen Querspriegel befestigt sind und die gegenüber angeordneten Krallen 19 jeweils verbinden. Noch einfacher ist die Verbindung der jeweiligen Düsenbohrungen durch im Querspriegel 12 jeweils angeordnete Hohlkanäle, die sich von einer Kralle 19 zur gegenüberliegenden Kralle 19 eines Querspriegels 12 erstrecken.

Die zentrale Druckluftzuführung zu den einzelnen Spriegeln 12 kann mit der Enteisungseinrichtung kombiniert werden. Dazu kann beispielsweise eine flexible Druckluftleitung auf der einen Spriegelseite vorgesehen sein, die die Kralle 19 mit Druckluft versorgt, wobei die Weiterleitung der Druckluft von der einen Kralle 19 zur gegenüberliegenden Kralle entweder durch einen Druckluftschlauch oder durch die im Querspriegel angeordnete Hohlkammer bzw. den im Querspriegel 12 angeordneten Hohlkanal erfolgt. Auf der anderen Spriegelseite kann die für die Enteisung erforderliche flexible Druckluftleitung vorgesehen sein, die ebenfalls beispielsweise über T-Stücke mit jedem Spriegel 12 in Verbindung steht. Dabei kann ein Hohlkanal in jedem Querspriegel 12 mit Düsenbohrungen zum Aufblasen der jeweiligen Taschen und ein weiterer Hohlkanal zur Druckluftverbindung zwischen den beiden Krallen vorgesehen sein.

Der Gleiteinsatz 24 sorgt für eine leichtgängige Lagerung für den Fall, dass die Druckluftversorgung ausfällt.

Alternativ zu dem Gleiteinsatz 24 kann vorgesehen sein, dass zur Lagerung der Kralle 19 Wälzelemente vorgesehen sind. Als Wälzelemente können Kugeln, Rollen oder andere Wälzkörper vorgesehen sein, wobei die Verwendung von Kugeln für die rohrförmige Führungsschiene gemäß Fig. 3 besonders bevorzugt ist.

Dies bedeutet, dass die Kralle 19 sowohl als Gleitkralle für eine lineare Gleitführung als auch als Wälzkralle für eine lineare Wälzführung ausgeführt sein kann.

Zum Aufbau des Führungselementes 18 ist noch folgendes anzumerken.

Der Grundkörper 36 sowie der Gleiteinsatz 24 erstrecken sich jeweils über einen Winkel > 180°, so dass gewährleistet ist, dass eine Hinterschneidung 20 gebildet wird. Insbesondere erstreckt sich der Winkel über einen Bereich zwischen 200° und 320°.

Die Kralle 19 weist zur Bildung der Hinterschneidung 20 zwei gekrümmte Schenkel 40, 41 auf, die zusammen das geschlitzte, hohlzylindrische bzw. hülsenförmige Profil der Kralle 19 bilden.

Es ist auch möglich, die Kralle 19 nur mit einem Schenkel, entweder mit dem Innenschenkel 41 oder dem Außenschenkel 40 auszubilden, wobei die am anderen Spriegelende vorgesehene Kralle identisch ausgebildet ist, d. h. ebenfalls entweder mit einem Innenschenkel 41 oder einem Außenschenkel 40. Auf diese Weise wird ebenso wie bei der Kralle gemäß den Figuren 4 und 5 die Höhen- und Seitenführung des Querspriegels 12 verwirklicht.

Die Hinterschneidung 20 kann auf unterschiedliche Weise ausgebildet sein, sofern die Höhenführung des Führungselementes 19 gewährleistet ist.

Ferner ist in den Figuren 4 und 5 zu erkennen, dass ein Querholm 23 des Querspriegels 12 tangential an der Kralle 19 gegenüber dem Längsschlitz 22 angreift. Dazu weist die Kralle 19 einen Schaft 39 auf, der eine tangentiale Verlängerung des hülsenförmigen Abschnittes des Grundkörpers 36 der Kralle 19 bildet. Der Querholm 23 ist mit dem Schaft 39 verbunden, beispielsweise durch eine Klemm- oder Spreizverbindung.

Sowohl die Kralle 19, d. h. der Grundkörper 36 der Kralle 19 als auch der Querholm 23 sind aus einem Verbundwerkstoff, insbesondere aus Kohlenstoff-Faser-Verbundwerkstoff hergestellt. Die hervorragenden Festigkeitseigenschaften des Kohlenstoff-Faser-Verbundwerkstoffs ermöglichen die Realisierung eines Querholms 23 mit sehr niedriger Bauhöhe, insbesondere mit einer Bauhöhe von 10 - 30 mm. Die Verwendung des Kohlenstoff-Faser-Verbundwerkstoffs zur Herstellung des Grundkörpers 36 der Kralle 19 bietet ebenfalls die Voraussetzung dafür, dass die Kralle 19 sehr kompakt aufgebaut ist, ohne dass dabei die Stabilität der Kralle 19 beeinträchtigt wird. Insgesamt bietet die Verwendung des Kohlenstoff-Faser-Verbundwerkstoffes also die Möglichkeit, sowohl das Führungselement 18 als auch den Querholm 23 des Querspriegels 12 platzsparend auszuführen, so dass eine optimale Ausnutzung der lichten Höhe des Laderaumes gegeben ist.

Zur weiteren Versteifung der Querholme 23 sind in diesem Hohlkammern 42 vorgesehen, wie in Fig. 2 dargestellt.

Ferner können mehrere, insbesondere zwei fluchtend angeordnete Krallen 19 pro Führungselement 18 vorgesehen sein, die als eine gabelförmige Doppelkralle ausgebildet sind. Dadurch wird die Stabilität der Längsführung der Querspriegel 12 verbessert.

Ferner kann vorgesehen sein, dass das Schiebeverdeck eine Plane mit Taschen zur Aufnahme der Querspriegel 12 aufweist, wobei die Querspriegel 12 jeweils Düsenbohrungen (nicht dargestellt) umfassen, die mit einer Druckluftversorgung verbindbar sind. Dabei kann für jeden Querspriegel eine Tasche vorgesehen sein. Es ist auch möglich, mehrere Spriegel in einer Tasche zusammenzufassen. Durch Aufblasen der Taschen werden auf dem Dach befindliche Eisschichten abgesprengt, so dass eine zuverlässige Enteisung des Daches ermöglicht wird.

Der Antrieb der Querspriegel 12 zur Längsverschiebung kann durch einen oder mehrere Mitnehmer erfolgen, wobei jeder Mitnehmer einen Magnetkern aufweist. Der Magnetkern wirkt mit einem entsprechenden Gegenstück am Querspriegel 12 zur magnetischen Kraftübertragung zusammen. Der, bzw. die Mitnehmer können pneumatisch angetrieben und am bzw. im Längsraum 10 geführt sein. Alternativ zu dem pneumatischen Antrieb kann auch ein Seilzug vorgesehen sein, der die Mitnehmer verschiebt.

Anstelle der Magnetführung kann auch eine Seilführung vorgesehen sein, die durch einen Luftmotor angetrieben wird.

Für den Verschluss der Düsenbohrungen 16 kann ein längliches flexibles Dichtelement vorgesehen sein (nicht dargestellt), das im Hohlkanal 17 dem Endspriegel 16 nachgeführt wird, wodurch die vom Endspriegel überfahrenen Düsenbohrungen 16 sukzessive verschlossen werden. Dadurch wird eine Verringerung des Druckluftverbrauches erzielt. Die Nachführung kann mittels eines im ersten Hohlkanal 17 geführten Seilzuges erfolgen. Der nicht benötigte Abschnitt des länglichen flexiblen Dichtelementes kann im zweiten Hohlkanal 29 angeordnet sein und bei Bedarf aus diesem heraus in den ersten Hohlkanal 17 hineingezogen werden. Für die Rückführung des Dichtelementes aus dem ersten Hohlkanal 17 in den zweiten Hohlkanal 29 kann ein im zweiten Hohlkanal 29 vorgesehener weiterer Seilzug angeordnet sein, der mit dem Dichtelement verbunden ist.

Zwischen zwei in Holmlängsrichtung nachgeordneten Querspriegeln 12 ist ein Hubbügel 26 vorgesehen, der zum einen die Querspriegel 12 im geschlossenen Zustand beabstandet und zum anderen als Auflagefläche für die Plane dient. Außerdem bewirkt der Hubbügel 26 beim Öffnen des Verdecks, dass die Plane ordnungsgemäß gefaltet wird.

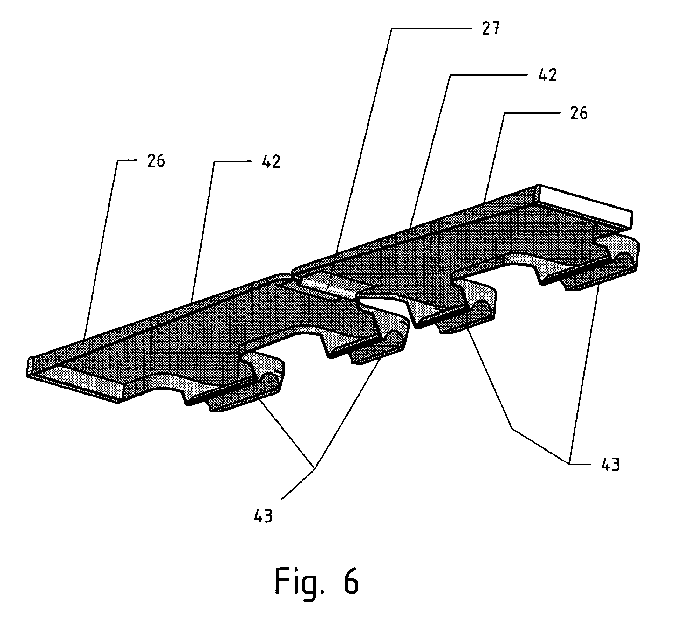

Die Anordnung des Hubbügels 26 zwischen den beiden Querspriegeln 12 ist in den Figuren 1 und 2 und eine Detailansicht des Hubbügels 26 in Fig. 6 veranschaulicht.

Dort ist zu erkennen, dass der Hubbügel 26 zwei Bügelteile 42 aufweist, die durch ein Gelenk 27 klappbar verbunden sind. Die beiden Bügelteile 42 verjüngen sich zum Gelenk 27 hin derart, dass die beiden Bügelteile 42 durch die beim Zusammenschieben der Spriegel auftretenden Kräfte in die gewünschte Richtung nach oben klappen. Ferner sind auf der der Führungsschiene 11 zugewandten Längsseite des Hubbügels 26 mehrere Auflager 43 angeformt. Die Form der Auflager 43 ist der Form des Außenprofils 15 der Führungsschiene 11 angepasst und weist jeweils ein entsprechendes konkaves Innenprofil auf. Im Gegensatz zur Kralle 19 sind die Auflager 43 nicht mit einer Hinterschneidung ausgebildet. Die Auflager 43 liegen vielmehr lose auf der Führungsschiene 11 auf und werden insbesondere durch das Gewicht der Plane auf die Führungsschiene 11 gepresst. Die Auflager 43 haben ferner die Funktion, den Faltvorgang zu unterstützen derart, dass bei Verwendung der aerostatischen Lagerung der Querspriegel 12 die ausströmende Druckluft die Auflager 43 der Hubbügel 26 mit einer Hubkraft beaufschlagt, wodurch das Anheben der Hubbügel 26 unterstützt und damit eine leichtere Betätigung des Schiebeverdeckes ermöglicht wird.

Die Hubbügel sind in Laminatbauweise aus einem Verbundwerkstoff, insbesondere aus einem Kohlenstoff-Faser-Verbundwerkstoff (CK) hergestellt. Das Gelenk 27 ist aus einem Keflar-Band, also aus einem Kohlenstoff-Faser-Armid-Band hergestellt, das eine ausreichende Flexibilität und gleichzeitig eine hohe Reißfestigkeit aufweist. Im Vergleich zu den herkömmlichen Hubbügeln, die üblicherweise aus Kunststoff hergestellt werden zeichnet sich der Hubbügel 26 gemäß Fig. 6 durch ein besonders leichtes Gewicht bei gleichzeitig großer Festigkeit aus.

Insgesamt bietet ein Schiebeverdeck mit den Längsholmen 10 gemäß den Figuren 1 bis 3 sowie den Querspriegeln 12 samt Führungsmodulen gemäß den Figuren 1, 2, 4 und 5 den Vorteil, dass die Innenmaße des Laderaumes bei Einhaltung der gesetzlich vorgeschriebenen Gesamthöhe maximiert werden können. Dazu dient die Verwendung des Verbundwerkstoffes, insbesondere des Kohlenstoff-Faser-Verbundwerkstoffes zur Herstellung des Längsholmes 10, der eine ausreichende Biege- und Verwindungsfestigkeit gewährleistet, ohne dass dafür zusätzliche konstruktive Versteifungsmaßnahmen, beispielsweise in Form von Aussteifungsschenkeln, erforderlich sind. Die Ausbildung des Führungselementes 18 als Kralle 19 ist in engem Zusammenhang mit dem biegesteifem Längsholm 10 zu sehen, da die Kralle 19 die kompakte Bauweise des Gesamtsystems weiter unterstützt insofern, als die im Stand der Technik erforderlichen Doppelrollenführungen zur Verwirklichung der Höhen- und Seitenführung nicht erforderlich sind. Vielmehr kann die Kralle 19 sowohl Seiten- als auch Höhenkräfte aufnehmen, so dass die Führung der Querspriegel 12 insgesamt durch ein Bauteil erfolgt. Die Verwendung eines Kohlenstoff-Faser-Verbundwerkstoffes nicht nur zur Herstellung des Längsholmes 10, sondern auch zur Herstellung der Kralle 19 sowie des Querholmes 23 der Querspriegel 12 ermöglicht eine noch kompaktere Bauweise.

### Bezugszeichenliste:

- 10: Längsholm
- 11: Führungsschiene für Querspriegel
- 12: Querspiegel
- 13,14: Führungsschiene für Rungen- und/oder Seitenwandung
- 15: Außenprofil der Führungsschiene
- 16: Bohrungen (Längsholm)
- 17: erster Hohlkanal
- 18: Führungselemente
- 19: Kralle
- 20: Hinterschneidung
- 21: Innenprofil der Kralle
- 22: Längsschlitz
- 23: Querholm
- 24: Gleiteinsatz
- 25: Gleitsteine
- 26: Hubbügel
- 27: Gelenk
- 28: Schlitz
- 29: zweiter Hohlkanal
- 30: Gehäusewand des zweiten Hohlkanals
- 31: hakenförmiger Abschnitt
- 32: rechteckiger Abschnitt
- 33: Aufnahme für Abdichtung
- 34: Unterkante
- 35: Führungsschlitz
- 36: Grundkörper der Kralle
- 37: Sicherungselement
- 38: Kanten des Längsschlitzes
- 39: Schaft
- 40,41: Schenkel der Kralle
- 42: Bügelteile
- 43: Auflager

## Patentansprüche

1. Längsholm (10) für einen Nutzfahrzeug- bzw. Anhängeraufbau mit wenigstens einer Führungsschiene (11) zur längsverschieblichen Lagerung von Querspriegeln (12),
**dadurch gekennzeichnet, dass**
der Längsholm (10) einen Verbundwerkstoff, insbesondere einen Kohlenstoff-Faser-Verbundwerkstoff (CFK) aufweist.

2. Längsholm (10) nach Anspruch 1,
**dadurch gekennzeichnet, dass**
der Längsholm (10) einschenklig ausgebildet ist.

3. Längsholm (10) nach Anspruch 2,
**dadurch gekennzeichnet, dass**
der Längsholm (10) weitere Führungsschienen (13, 14) zur längsverschieblichen Lagerung von Rungen und/oder einer Seitenwandung aufweist, wobei die Führungsschienen (11, 13, 14) vertikal angeordnet sind.

4. Längsholm (10) nach wenigstens einem der Ansprüche 1 bis 3,
**dadurch gekennzeichnet, dass**
ein Außenprofil (15) der Führungsschiene (11) für die Querspriegel (12) gekrümmt, insbesondere konvex gekrümmt ausgebildet ist.

5. Längsholm (10) nach wenigstens einem der Ansprüche 1 bis 4,
**dadurch gekennzeichnet, dass**
die Führungsschiene (11) für die Querspriegel (12) einen im wesentlichen stab- oder rohrförmigen Querschnitt aufweist.

6. Längsholm (10) nach wenigstens einem der Ansprüche 1 bis 5,
**dadurch gekennzeichnet, dass**
Bohrungen (16) auf dem Umfang der Führungsschiene (11) angeordnet sind, wobei die Bohrung (16) mit einem in der Führungsschiene (11) in Längsrichtung ausgebildeten Hohlkanal (17) verbunden sind, der an eine Druckluftversorgung anschließbar ist.

7. Querspriegel (12) für einen Nutzfahrzeug- bzw. Anhängeraufbau mit Führungselementen (18), die mit Längsholmen (10) des Aufbaus zur längsverschieblichen Lagerung der Querspriegel (12) verbindbar sind,
**dadurch gekennzeichnet, dass**
die Führungselemente (18) jeweils mindestens eine Kralle (19) umfassen, die eine Hinterschneidung (20) aufweist, wobei die Hinterschneidung (20) derart angepasst ist, dass die Kralle (19) eine Führungsschiene (11) des Längsholmes (10) im montierten Zustand zumindest abschnittsweise formschlüssig hintergreift.

8. Querspriegel (12) nach Anspruch 7,
**dadurch gekennzeichnet, dass**
ein Innenprofil (21) der Kralle komplementär zu einem Außenprofil (15) der Führungsschiene (11) ausgebildet ist.

9. Querspriegel (12) nach Anspruch 7 oder 8,
**dadurch gekennzeichnet, dass**
das Innenprofil (21) der Kralle (19) gekrümmt, insbesondere konkav gekrümmt ausgebildet ist.

10. Querspriegel (12) nach wenigstens einem der Ansprüche 7 bis 9,
**dadurch gekennzeichnet, dass**
die Kralle (19) einen im wesentlichen hohlzylindrischen Querschnitt mit einem zur Aufnahme der Führungsschiene (11) vorgesehenen Längsschlitz (22) aufweist.

11. Querspriegel (12) nach Anspruch 10,
**dadurch gekennzeichnet, dass**
ein Querholm (23) des Querspriegels (12) tangential an der Kralle (19) gegenüber dem Längsschlitz (22) angreift.

12. Querspriegel (12) nach wenigstens einem der Ansprüche 7 bis 11,
**dadurch gekennzeichnet, dass**
die Kralle (19) zur Lagerung auf der Führungsschiene (11) einen Gleiteinsatz (24) und/oder eine Teflonbeschichtung und/oder Gleitsteine (25) umfasst.

13. Querspriegel (12) nach wenigstens einem der Ansprüche 7 bis 11,
**dadurch gekennzeichnet, dass**
die Kralle (19) zur Lagerung auf der Führungsschiene (11) Wälzelemente aufweist.

14. Querspriegel (12) nach wenigstens einem der Ansprüche 7 bis 12,
**dadurch gekennzeichnet, dass**
die Kralle (19) eine mit einer Druckluftversorgung verbindbare Luftzufuhreinrichtung aufweist zur Ausbildung eines Luftkissens zwischen der Kralle (19) und dem Längsholm (10).

15. Querspriegel (12) nach wenigstens einem der Ansprüche 7 bis 14,
**dadurch gekennzeichnet, dass**
ein Führungselement (18) mehrere, insbesondere zwei fluchtend angeordnete Krallen (19) aufweist.

16. Querspriegel (12) nach wenigstens einem der Ansprüche 7 bis 15,
**dadurch gekennzeichnet, dass**
der Querspriegel (12) einen Verbundwerkstoff, insbesondere einen Kohlenstoff-Faser-Verbundwerkstoff (CFK) aufweist.

17. Schiebeverdeck für ein Nutzfahrzeug bzw. einen Anhänger umfassend
- parallel angeordnete Längsholme (10) mit Führungsschienen (11, 13, 14) und
- quer zu den Längsholmen (10) angeordnete Querspriegel (12), die in Holmlängsrichtung verschieblich gelagert sind und jeweils Führungselemente (18) aufweisen, wobei die Führungselemente (18) mit den zugehörigen Führungsschienen (11) zur längsverschieblichen Lagerung der Querspriegel (12) in Eingriff sind,
**dadurch gekennzeichnet, dass**
die Längsholme (10) einen Verbundwerkstoff, insbesondere einen Kohlenstoff-Faser-Verbundwerkstoff (CFK) und die Führungselemente (18) jeweils mindestens eine Kralle (19) aufweisen, die eine Hinterschneidung (20) umfasst, wobei die Hinterschneidung (20) die zugeordnete Führungsschiene (11) des Längsholms (10) zumindest abschnittsweise formschlüssig hintergreift.

18. Schiebeverdeck nach Anspruch 17,
**dadurch gekennzeichnet, dass**
das Schiebeverdeck eine Plane mit Taschen zur Aufnahme der Querspriegel (12) aufweist, wobei die Querspriegel (12) jeweils Bohrungen umfassen, die mit einer Druckluftversorgung verbindbar sind.

19. Schiebeverdeck nach Anspruch 17 oder 18,
**dadurch gekennzeichnet, dass**
die Längsholme (10) Mitnehmer für die Querspriegel (12) aufweisen, wobei die Mitnehmer jeweils einen Magnetkern umfassen, der mit einem oder mehreren Querspriegeln (12) zur magnetischen Kraftübertragung zusammenwirkt.

20. Schiebeverdeck nach wenigstens einem der Ansprüche 17 bis 19,
**dadurch gekennzeichnet, dass**
Hubbügel (26) zwischen zwei in Holmlängsrichtung nachfolgend angeordneten Querspriegeln (12) vorgesehen sind, die in Laminatbauweise aus einem Verbundwerkstoff, insbesondere aus einem Kohlenstoff-Faser-Verbundwerkstoff (CFK) hergestellt sind.

21. Schiebeverdeck nach Anspruch 20,
**dadurch gekennzeichnet, dass**
ein Gelenk (27) der Hubbügel (26) aus einem Kohlenstoff-Faser-Aramid-Band hergestellt ist.
